# EUROPÄISCHE PATENTANMELDUNG

(11) **EP 4 701 065 A1**
(43) Veröffentlichungstag der Anmeldung: **25.02.2026**
(21) Anmeldenummer: 24195579.8
(22) Anmeldetag: 21.08.2024
(51) Int. Cl.: H02M 7/5387, H02M 7/5395, H02M 1/00, H02M 1/32, H02P 29/028

(54) **CONDITION MONITORING VERFAHREN VON ANTRIEBSSYSEMEN MITTELS EINES REGLERVERFAHRENS**

(71) Anmelder: Siemens Aktiengesellschaft, 80333 München (DE); Karlsruher Institut für Technologie, 76131 Karlsruhe (DE)
(72) Erfinder: Tsotoulidis, Savvas, 35132 Lamia (GR); Liske, Andreas, 76327 Pfinztal (DE); Schmitz-Rode, Benedikt, 76185 Karlsruhe (DE)
(74) Vertreter: Siemens Patent Attorneys

(57) **Zusammenfassung**

Die Erfindung betrifft ein Computer-implementiertes Verfahren, eine Computer-implementierte Vorrichtung, ein System und ein Computerprogrammprodukt zum Bestimmen eines Degradationsfortschritts eines Stromrichters umfassend Erfassen eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist, Bestimmen einer Amplitude des Ausgangsstroms und/oder der Ausgangsspannung basierend auf dem erfassten zeitlichen Verlauf, Bestimmen einer Differenz zwischen der bestimmten Amplitude und einer vorbestimmten Referenzamplitude, Bestimmen einer Regelungsgröße, zumindest teilweise basierend auf von einem Fehlerspeicher erhaltenen Daten, zum Zuführen an den Stromrichter, um die bestimmte Differenz zu minimieren, Bereitstellen einer Referenzregelungsgröße, welche mit einem Degradationsfortschritt des Stromrichters assoziiert ist und Bestimmen, zumindest teilweise basierend auf einem Vergleichen der bestimmten Regelungsgröße mit der Referenzregelungsgröße, eines Degradationsfortschritts des Stromrichters.

## Beschreibung

Die vorliegende Erfindung betrifft ein Computer-implementiertes Verfahren, eine Computer-implementierte Vorrichtung, ein System sowie ein Computerprogrammprodukt zum Bestimmen eines Degradationsfortschritts eines Stromrichters.

Elektrische Bauteile unterliegen im Allgemeinen einem Alterungsprozess. Diese können z.B. durch wiederholtes Erwärmen und Abkühlen der betreffenden Bauteile im Regelbetrieb verursacht werden, durch im Material der elektrischen Bauteile vorhandene Materialdefekte, etc. Dieser Alterungsprozess führt zu einer in der Regel begrenzten Lebenszeit der betreffenden Bauteile, welche folglich nach einer gewissen Einsatzzeit ausgetauscht werden müssen.

Die verbleibende Lebenszeit von Komponenten in einem elektrischen System (z.B. in einem Stromrichtersystem) kann für einen Anlagenbetreiber häufig schwer zu ermitteln sein. Das Bestimmen einer zu verbleibenden Lebenszeit kann sowohl für einen Hersteller des jeweiligen elektrischen Bauteils als auch für einen Systemadministrator, welcher für eine Implementierung des jeweiligen elektrischen Bauteils zuständig ist, eine Herausforderung darstellen. Hersteller führen diesbezüglich häufig offline Berechnungen durch, um eine zu erwartete Lebenszeit eines Bauteils (z.B. eines Leistungswandlers) zu bestimmen und führen diese dann in ihren Dokumentationen auf. Diese Berechnungen basieren meist auf Lastprofilen und Produktnutzung, wie sie über einen idealen Produktzyklus hinweg auftreten kann, während typische Randbedingungen in Betracht gezogen werden, wie z.B. Temperatur, Feuchtigkeit, Höhe, etc.

Die Ermittlung der verbleibenden Lebenszeit kann z.B. durch eine regelmäßige Wartung der betreffenden Komponenten erfolgen. In einem derartigen Fall können z.B. zwei Wartungsstrategien in Frage kommen. Es ist ggf. möglich, basierend auf den bekannten Lastprofilen und spezifizierten Umgebungsbedingungen Wartungsintervalle festzulegen, zu deren Zeitpunkten die zu wartenden Komponenten mit hoher Wahrscheinlichkeit noch funktionstüchtig sind. Die Wahl dieser Wartungsintervalle kann jedoch häufig dazu führen, dass Komponenten mit ggf. noch beträchtlicher verbliebener Lebenszeit ausgetauscht werden, was zu (unnötig) hohen Kosten und Materialeinsatz führen kann.

Als weitere Wartungsstrategie, falls Stillstandzeiten des elektrischen Systems in Kauf genommen werden können, kann auch ein Austausch der betreffenden Komponente erfolgen, wenn diese auch tatsächlich ausgefallen ist. Dies kann zwar die mit einem zu frühen Austausch verbundenen (unnötigen) Kosten verringern, jedoch kann demgegenüber ein unerwarteter Stillstand des elektrischen Systems erfolgen und dadurch z.B. eine Produktionslinie stilllegen. Je nach dadurch aufgetretenem Defekt kann dies zu unerwartet hohen Kosten führen. Die Auswahl, der für die betreffende Anlage und Applikation optimierten Wartungsintervalle kann zu einer globalen Kostenreduktion und zu einer Minimierung der Stillstandzeit des elektrischen Systems führen.

Durch den Einsatz sog. Condition Monitoring Verfahren kann der Zeitpunkt, wann eine Wartung des elektrischen Systems durchgeführt werden soll, optimiert werden, indem die verbliebene Lebenszeit der elektrischen Komponenten bzw. ein Fortschritt eines aktuellen Degradationsprozesses ermittelt wird.

Condition Monitoring kann dabei in drei unterschiedliche Klassen von Ansätzen unterteilt werden.

Im Rahmen der sensorbasierten Condition Monitoring Systeme kann zusätzliche/dedizierte Sensorik und/oder komplexe Messschaltungen verwendet werden, um direkt Größen eines elektrischen Systems zu messen, welche Rückschlüsse auf einen aktuellen Degradationsfortschritt elektrischer Komponenten ermöglichen. Die Komplexität und auch die Implementierungskosten eines derartigen Systems können dabei deutlich steigen. Unterschieden werden kann weiter zwischen Messsystemen, die online im Betrieb eines Stromrichtersystems eingesetzt werden und externer Prüftechnik, die lediglich in festgelegten (vorbestimmten) Intervallen zur Messung verwendet wird.

Im Rahmen modellbasierter Condition Monitoring Systeme wird versucht, einige der vorstehend genannten Probleme zumindest teilweise durch Modellbildung zu überwinden. In diesen Modellen wird der Alterungsvorgang physikalisch oder stochastisch implementiert. Das Modell wird anschließend online im Betrieb mit Lastprofilen und Umgebungsbedingungen als Eingangsvariablen betrieben. Das Ergebnis kann eine stochastische Bewertung der verbliebenen Lebenszeit bzw. des aktuellen Schweregrads der Schädigung sein. Trotz des Wegfalls zusätzlicher Messschaltungen besteht die Herausforderung dennoch in einem Modellaufbau mit ausreichender Güte.

Datenbasierte Condition Monitoring Systeme können derart eingerichtet sein, aus bestehenden Mess- und Zustandsgrößen Muster, die Rückschlüsse auf die Änderung eines Degradationsindikators ermöglichen und damit Rückschlüsse auf eine eingetretene Alterung ermöglichen. Hierbei kann der Informationsgehalt von verschiedenen möglichen Messsignalen und Zustandsgrößen analysiert werden sowie auf Möglichkeiten der Signalverarbeitung zurückgegriffen werden. Dies kann basierend auf statistischen Methoden erfolgen oder basierend auf Methoden der künstlichen Intelligenz.

Bekannte Condition Monitoring Verfahren ermöglichen jedoch noch nicht unter allen Umständen eine zufriedenstellende Bestimmung eines Degradationsfortschritts, da diese zu komplexe Hardware, eine zu komplexe Modellbildung oder eine aufwendige Datenanalyse erfordern. In einigen Fällen, sind derzeit verwendete Condition Monitoring Verfahren für den Feldeinsatz schlicht zu ungenau.

Es kann möglich sein, das Condition Monitoring eines Stromrichters, z.B. bei Vorliegen eines (elektrischen) Antriebs auf das Erfassen von mechanischen Vibrationen und/oder elektrischer Signale, welche mit dem Betrieb des Antriebs assoziiert sind, zu basieren. Eine Möglichkeit in diesem Zusammenhang kann der Rückgriff auf eine motor current signature analysis (MCSA) sein, welche z.B. angewendet wird, um mechanische Fehler eines Antriebs zu identifizieren, wie z.B. eine Fehlausrichtung, Ungleichgewicht, lockere Füße des Motors, Kavitationseffekte (z.B. bei Pumpen) etc. Dies stützt sich jedoch im Wesentlichen auf die Auswertung mechanischer Parameter und kann daher nicht in allen Fällen eine erwünschte Vorhersagegenauigkeit sicherstellen.

In einigen Fällen kann es möglich sein, Ausgangsströme und/oder Ausgangsspannungen eines elektrischen Bauteils zu messen, welche normalerweise durch eine PI-Regelung geregelt und damit stabilisiert werden. In einigen Fällen können auch Änderungen in Fehlspannungen (z.B. hervorgerufen durch eine Degradation des elektrischen Bauteils) durch z.B. eine PI-Regelung kompensiert werden. Aufgrund des integrierenden Verhaltens des PI-Reglers kann jedoch ein möglicherweise vorhandener Stromfehler nur verzögert oder gar nicht ausgeregelt werden. Dies kann die korrekte Identifikation einer Fehlspannung bzw. eine korrekte Phasenlage einer Harmonischen erschweren. Dies kann im Besonderen bei drehzahlvariablen Antriebssystemen problematisch sein, da die für das Condition Monitoring verwendeten Harmonischen eine zusätzliche Betriebspunktabhängigkeit aufweisen können.

Es besteht daher ein Bedarf ein verbessertes Condition Monitoring Verfahren bereitzustellen, welches die Nachteile und Einschränkungen derzeit verwendeter Condition Monitoring Verfahren zumindest teilweise überwindet.

Die vorliegende Erfindung stellt sich daher die technische Aufgabe ein verbessertes und leicht bzw. kostengünstig zu implementierendes Condition Monitoring Verfahren bereitzustellen.

Dies kann zumindest teilweise gemäß einem ersten Aspekt der vorliegenden Erfindung erreicht werden, welcher ein Computer-implementiertes Verfahren zum Bestimmen eines Degradationsfortschritts eines Stromrichters vorschlägt. Das Computer-implementierte Verfahren umfasst ein Erfassen eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist sowie ein Bestimmen einer Amplitude des Ausgangsstroms und/oder der Ausgangsspannung basierend auf dem erfassten zeitlichen Verlauf. Ferner umfasst das Computer-implementierte Verfahren ein Bestimmen einer Differenz zwischen der bestimmten Amplitude und einer vorbestimmten Referenzamplitude sowie ein Bestimmen einer Regelungsgröße, zumindest teilweise basierend auf von einem Fehlerspeicher erhaltenen Daten, zum Zuführen an den Stromrichter, um die bestimmte Differenz zu minimieren. Das Computer-implementierte Verfahren umfasst ferner ein Bereitstellen einer Referenzregelungsgröße, welche mit einem Degradationsfortschritt des Stromrichters assoziiert ist, sowie ein Bestimmen, zumindest teilweise basierend auf einem Vergleichen der bestimmten Regelungsgröße mit der Referenzregelungsgröße, eines Degradationsfortschritts des Stromrichters.

Unter einem Degradationsfortschritt kann vorliegend ein Voranschreiten eines Alterungsprozesses des Stromrichters (hierin auch als Umrichter bezeichnet) verstanden werden. Ein Voranschreiten der Degradation kann mit einer ansteigenden Ausfallwahrscheinlichkeit des Stromrichters (z.B. durch einen Defekt) assoziiert sein. Der zeitliche Verlauf kann zu vorbestimmten (diskreten) Zeitpunkten erfasst werden und/oder kann kontinuierlich während des Betriebs des Stromrichters erfasst werden. Der erfasste zeitliche Verlauf kann sich über eine Dauer von weniger als einer Sekunde erstrecken. In einigen Fällen kann such der erfasste zeitliche Verlauf über eine Sekunde bis zehn Sekunden erstrecken, in einigen Fällen über eine Dauer von elf Sekunden bis 30 Sekunden, in weiteren Fällen über eine Dauer von 31 Sekunden bis zu 60 Sekunden. In weiteren Fällen kann sich die Dauer auch über mehrere Minuten erstrecken (z.B., zwei, drei, vier, fünf, zehn, 15, 20, 25, 30, 35, 40, 45, 50, 55 Minuten). Es kann hingegen auch möglich sein, dass sich der zeitliche Verlauf über eine Dauer von mehr als einer Stunde erstreckt oder über mehrere Tage hinweg.

In einigen Fällen kann das Bestimmen eines Degradationsfortschritts nicht nur als eine absolute Feststellung (nämlich, dass eine Degradation eingetreten ist) erfolgen, sondern insbesondere kann auch eine z.B. stufenweise Feststellung erfolgen, wie weit der Degradationsfortschritt bereits fortgeschritten ist. Auf diese Weise kann z.B. eine Aussage dahingehend erfolgen, dass der Stromrichter z.B. 10 %, 20 %, 30 %, 40 %, 50 %, 60 %, 70 %, 80 %, 90 %, 99 % seiner erwarteten Lebenszeit bereits erreicht hat, was als Ausgangspunkt dafür benutzt werden kann zu entscheiden, ob ein Austausch des Stromrichters erfolgen soll. Die vorbestimmte Referenzamplitude kann sich auf eine Amplitude des Ausgangsstroms und/oder der Ausgangsspannung beziehen, welche für gegenwärtig vorliegende Operationsparameter des Stromrichters und/oder des elektrischen Antriebs erwartet bzw. als normal angesehen werden würden.

In einigen Fällen kann der bestimmte Degradationsfortschritt einem Benutzer des Stromrichters über eine Benutzerschnittstelle (z.B. ein Display, ein Tablet, eine gesprochene Aussage, etc.) bereitgestellt werden.

Die basierend auf der Referenzamplitude ermittelte Differenz kann als eine Fehlspannung bzw. ein Fehlstrom der Ausgangsspannung bzw. des Ausgangsstroms angesehen werden.

Das Antriebsmittel kann als ein Elektromotor bereitgestellt werden. Das Antriebsmittel kann eine Synchron- oder Asynchronmaschine sein.

Durch Verwenden eines Fehlerspeichers kann eine verbesserte Regelung (z.B. ein Minimieren und/oder Nullen) der bestimmten Differenz ermöglicht werden. Eine frequenzabhängige Verstärkung eines ggf. alternativ verwendeten PI-Reglers kann auf diese Weise effizient unterdrückt werden. Da der I-Anteil einer PI-Regelung auf einer Integration einer Abweichung zwischen einer Sollgröße und einer Istgröße (d.h. einem Regelfehler) basiert, ist eine Regelung hochfrequenter Komponenten im respektive erfassten Signal meist nur schwer möglich bzw. unmöglich. Durch Verwenden eines Fehlerspeichers kann diese Frequenzabhängigkeit des zu regelnden Signals verbessert bzw. verhindert werden. Dies kann eine zielgerichtetere und genauere Regelung des Ausgangsstroms bzw. der Ausgangsspannung ermöglichen.

Gemäß einer Ausführungsform kann das Bestimmen der Regelungsgröße ferner ein Bestimmen der Regelungsgröße basierend auf einer historisch erfassten Zuordnung von Regelungsgrößen zu bestimmten Differenzen umfassen, bevorzugt unter Verwenden eines Repetitive Control Reglers.

Die historisch erfasste Zuordnung kann für den gleichen Typ von Stromrichter oder zumindest einen technisch ähnlichen Typ von Stromrichter erfolgt sein.

Die historisch erfasste Zuordnung kann somit Informationen darüber vorhalten, mit Hilfe welcher Regelungsgrößen eine bestimmte Differenz minimiert bzw. kompensiert (bzw. genullt) werden kann.

Auf diese Weise kann eine zielgerichtete und schnelle Kompensation einer möglichen Differenz erreicht werden, welche kein Herantasten an einen Sollwert erfordert, wie dies ggf. bei Pl-Regler-basierten Verfahren auftreten kann. Somit kann ein gewünschter Sollwert der Ausgangsspannung- bzw. des Ausgangsstroms schneller reicht werden.

Gemäß einer weiteren Ausführungsform kann das Bestimmen der Regelungsgröße unter Verwenden des Repetitive Control Reglers erfolgen und der Repetitive Control Regler als Vorsteuerung einer geschlossenen Regelstrecke fungieren.

Unter einer Vorsteuerung kann ein Element eines Reglers verstanden werden, das eine Stellgröße mit einem Wert beaufschlagt, der unabhängig von Zuständen der Regelstrecke und daraus resultierenden Messungen ist. Die Vorsteuerung bei einer PI-Stromregelung kann in einigen Fällen auf Messgrößen zurückgreifen, wie z.B. eine Drehzahl eines elektrischen Antriebsmittels und/oder gemessene Ströme. So können die induzierten Spannungen geschätzt/berechnet werden, die dann bereits vorgesteuert werden. Der Regler wird somit um genau diese "Fehlspannung" entlastet. Die Vorsteuerung ermöglicht eine Berücksichtigung des Stellgrößen-Bedarfs, der aufgrund des Sollwertverlaufs zu erwarten ist. Da sie eine Steuerung ist, kann die Vorsteuerung ein Führungsverhalten verbessern, ohne eine Stabilität dieser zu gefährden.

Insbesondere kann die Fehlerspeicher-basierte Regelung zu einer Regelung von höherfrequenten Komponenten des Ausgangsstroms und/oder der Ausgangsspannung beitragen, welche durch das Integrationsverhalten einer PI-Regelung nicht regelbar sind. Dies kann z.B. für Frequenzen der Fall sein, welche die Grenzfrequenz eines Reglers (d.h. eine Frequenz eines Signals welche durch einen Regler gerade noch erfassbar und/oder regelbar ist) und der allgemein durch das das Nyqvist-Theorem für eine gewisse Abtastrate definierbare Grenzfrequenz (welche gerade noch abgetastet werden kann), überschreiten.

Die Vorsteuerung kann Informationen über die Interaktion des Stromrichters und/oder des elektrischen Antriebs und/oder deren Interaktion beinhalten, welche z.B. statisch ist und/oder bereits bekannt ist (z.B. unabhängig von einer PI-Regelung berechnet/modelliert und/oder geschätzt werden kann). Auf diese Weise kann eine effiziente Trennung von bereits bekannten für eine Regelung relevanter Größen sowie von Größen, welche nicht vorab bekannt sind und daher in Echtzeit erfasst werden müssen, erfolgen. Dies kann zu einer effizienteren Reglung beitragen.

Gemäß einer weiteren Ausführungsform kann das Computer-implementierte Verfahren ferner ein Zuführen der Regelungsgröße an den Stromrichter umfassen, um die bestimmte Differenz zu minimieren.

Unter einer Regelungsgröße kann vorliegend eine Spannung und/oder ein Strom verstanden werden, welcher dem Stromrichter zugeführt werden kann, um die Ausgangsspannung und/oder den Ausgangsstrom des Stromrichters auf einen erwünschten Sollwert zu setzen, bevorzugt derart, dass die bestimmte Differenz minimiert (oder sogar genullt wird).

Auf diese Weise kann eine möglicherweise auftretende Fehlspannung durch eine verwendete Regelung minimiert bzw. kompensiert werden.

Gemäß einer weiteren Ausführungsform kann das Computer-implementierte Verfahren ferner ein Kombinieren der zugeführten Reglungsgröße mit einem Ausgang einer PI-Regelung sowie ein Zuführen der kombinierten Regelungsgröße an den Stromrichter umfassen, um einen Ausgangsstrom und/oder eine Ausgangsspannung des Stromrichters zu regeln.

Durch ein Kombinieren der basierend auf einem Fehlerspeicher gewonnenen Regelungsgröße mit dem Ausgang einer PI-Regelung, kann somit eine Gesamtregelungsgröße erzeugt werden, um den Ausgangsstrom und/oder die Ausgangsspannung auf einen bestimmten Sollwert zu regeln und die bestimmte Differenz zu minimieren. Ferner kann auf diese Weise ein Gütekriterium definiert werden für die Ausregelgüte eines betrachteten Betriebspunktes.

Auf diese Weise kann es ermöglicht werden, zeitlich veränderliche ggf. nicht vorab bekannte Abweichungen einer Amplitude des Ausgangsstroms bzw. der Ausgangsspannung zusätzlich zu den bereits bekannten Parametern zu kompensieren. Dies kann zu einem vereinfachten Regelungsverfahren beitragen.

Gemäß einer weiteren Ausführungsform umfasst das Computer-implementierte Verfahren ein Hinzufügen, zu dem Fehlerspeicher, einer Zuordnung der bestimmten Differenz zu der bestimmten Regelungsgröße.

Durch Hinzufügen der Zuordnung zu dem Fehlerspeicher, kann basierend auf den momentan erfassten Werten das Verhalten der Steuerung auch für zukünftige Szenarien angepasst werden. Auf diese Weise kann die Fehlerspeicher-basierte Steuerung für zukünftige Steuerungsschritte weiter verbessert werden.

Gemäß einer weiteren Ausführungsform können die Einträge des Fehlerspeichers mit einem Oberwellenspektrum des erfassten zeitlichen Verlaufs assoziiert sein.

Unter einem Oberwellenspektrum können Signalkomponenten des Ausgangsstroms und/oder der Ausgangsspannung verstanden werden, welche ein Vielfaches einer Grundfrequenz darstellen. Die in dem Oberwellenspektrum enthaltenen Signale können eine Frequenz aufweisen, welche das Nyqvist-Kriterium überschreiten, und damit z.B. durch eine PI-Regelung nicht mehr abgetastet werden können und/oder durch zumindest den I-Anteil der PI-Regelung herausintegriert und damit nicht mehr geregelt werden können, verstanden werden.

Auf diese Weise kann eine effiziente Trennung der Regelung für höherfrequente Signalkomponenten (z.B. durch die Fehlerspeicher-basierte Regelung) und der Regelung für niederfrequente Signalkomponenten (z.B. durch eine PI-Regelung) ermöglicht werden und damit insgesamt das Regelungsspektrum (bzgl. eines Frequenzbereichs innerhalb dessen eine Regelung ermöglicht werden kann) effizient verbreitert werden.

Gemäß einer weiteren Ausführungsform kann der Degradationsfortschritt zumindest teilweise durch eine Ermüdung einer Lötstelle und/oder einer Degradation einer Gate-Elektrode eines Transistors und/oder einer Ablösung eines Bonddrahts von einem integrierten Schaltkreis oder einem Halbleiter hervorgerufen werden.

Somit kann erfindungsgemäß für eine Vielzahl möglicher Degradationsursachen ein Voranschreiten der Degradation frühzeitig entdeckt werden und entsprechende, falls notwendig, Gegenmaßnahmen ergriffen werden (z.B. ein Tausch oder eine Reparatur des Stromrichters initiiert werden).

Gemäß einer weiteren Ausführungsform kann der Stromrichter einen Bipolartransistor mit isolierter Gate-Elektrode, IGBT, umfassen, bevorzugt sechs IGBTs.

Auf diese Weise kann eine effiziente und kostengünstige Implementierung eines Stromrichters bereitgestellt werden.

Gemäß einer weiteren Ausführungsform kann der Stromrichter eine Drehstrombrückenschaltung sein, bevorzugt ein 3-phasiger 2-Level Wechselrichter.

Auf diese Weise kann effizient ein Stromrichter für drei Phasen bereitgestellt werden.

Gemäß einer weiteren Ausführungsform kann die Drehstrombrückenschaltung zumindest sechs IGBTs umfassen, welche seriell beschaltet werden können und das Bestimmen der Regelungsgröße kann winkelabhängig für jeden der sechs IGBTs erfolgen.

In einigen Fällen kann der Stromrichter bzw. die Drehstrombrückenschaltung ein Halbleitermodul, zwei, drei, vier, fünf, sechs, sieben, acht, neun, zehn oder mehr Halbleitermodule umfassen.

Es sei angemerkt, dass die hierin genannten Aspekte der Erfindung nicht auf IGBTs oder MOS-FETs als Halbleitermodule beschränkt sind, sondern dass Aspekte der Erfindung auch auf andere Halbleitermodule, welche hierin nicht explizit beschrieben werden, angewandt werden können.

Dies kann eine besonders kompakte und kostengünstige Implementierung der Drehstrombrückenschaltung ermöglichen

Gemäß einem zweiten Aspekt der vorliegenden Erfindung wird ein Computerprogrammprodukt vorgeschlagen. Das Computerprogrammprodukt kann Befehle umfassen, die bei der Ausführung des Programms durch einen Computer diesen veranlassen, das Verfahren nach einem der Ausführungsformen, wie oben diskutiert, auszuführen.

Ein Computerprogrammprodukt, wie z.B. ein Computer-programm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computer-programm-Mittel erfolgen.

Gemäß einem dritten Aspekt der vorliegenden Erfindung wird eine Computer-implementierte Vorrichtung zum Bestimmen eines Degradationsfortschritts eines Stromrichters vorgeschlagen. Die Computer-implementierte Vorrichtung umfasst eine Erfassungseinheit zum Erfassen eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist sowie eine erste Bestimmungseinheit zum Bestimmen einer Amplitude des Ausgangsstroms und/oder der Ausgangsspannung basierend auf dem erfassten zeitlichen Verlauf. Ferner umfasst die Computer-implementierte Vorrichtung eine zweite Bestimmungseinheit zum Bestimmen einer Differenz zwischen der bestimmten Amplitude und einer vorbestimmten Referenzamplitude sowie eine dritte Bestimmungseinheit zum Bestimmen einer Regelungsgröße, zumindest teilweise basierend auf von einem Fehlerspeicher erhaltenen Daten, zum Zuführen an den Stromrichter, um die bestimmte Differenz zu minimieren. Die Computer-implementierte Vorrichtung umfasst ferner eine Bereitstellungseinheit zum Bereitstellen einer Referenzregelungsgröße, welche mit einem Degradationsfortschritt des Stromrichters assoziiert ist, sowie eine vierte Bestimmungseinheit zum Bestimmen, zumindest teilweise basierend auf einem Vergleichen der bestimmten Regelungsgröße mit der Referenzregelungsgröße, eines Degradationsfortschritts des Stromrichters.

Die jeweilige Einheit, zum Beispiel die Erfassungseinheit und die Bestimmungseinheiten, kann/können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein

Gemäß einer Ausführungsform kann die Computer-implementierte Vorrichtung eine Ausführungseinheit zum Ausführen des Computerprogrammprodukts wie oben beschrieben sowie eine weitere Ausführungseinheit zum Ausführen des Computer-implementierten Verfahrens, wie oben beschrieben, umfassen.

Die Ausführungseinheit kann z.B. als Computer, Prozessor, Field Programmable Gate Array (FPGA) oder eine Kombination davon vorgesehen sein.

Gemäß einem vierten Aspekt der vorliegenden Erfindung wird ein System zum Bestimmen eines Degradationsfortschritts eines Stromrichters vorgeschlagen. Das System umfasst die Computer-implementierte Vorrichtung wie oben beschrieben und/oder das Computerprogrammprodukt wie oben beschrieben.

Die für die vorgeschlagene Vorrichtung beschriebenen Ausführungsformen und Merkmale gelten für das vorgeschlagene Verfahren entsprechend und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Insbesondere sei angemerkt, dass das oben beschriebene Verfahren bzw. die oben beschriebene Vorrichtung, das oben beschriebene Computerprogrammprodukt sowie das System nicht auf Stromrichter beschränkt ist, sondern auch in anderen industriellen Kontexten Anwendung finden kann.
- Fign. 1A-1C: zeigen einen Querschnitt durch einen IGBT (Fig. 1A) sowie mögliche Degradationsursachen eines Stromrichters (Fign. 1B und 1C);
- Fig. 2: zeigt ein exemplarisches System, welches ein Zusammenwirken eines Stromrichters in einem möglichen erfindungsgemäßen Kontext zeigt;
- Fig. 3: zeigt ein exemplarisches Ersatzschaltbild einer Drehstrombrückenschaltung;
- Fig. 4: zeigt ein exemplarisches αβ-Diagramm;
- Fig. 5: zeigt einen exemplarischen Systemflussplan gemäß Aspekten der vorliegenden Erfindung;
- Fig. 6: zeigt eine schematische Darstellung eines Vorsteuerungs-basierten Regelungskonzepts;
- Fign. 7A und 7B: zeigen eine exemplarische Gegenüberstellung eines zeitlichen Verlaufs eines Ausgangsstroms;
- Fign. 8A und 8B: zeigen ein exemplarisches Auftreten einer Fehlspannung für verschiedene Degradationsursachen;
- Fign. 9A und 9B: zeigen einen exemplarischen Vergleich eines Differenzsignals eines Integralteils für eine PI-Regelung und eine Repetitive Control Regelung;
- Fig. 10: zeigt ein Ablaufdiagramm eines exemplarischen Computer-implementierten Verfahrens;
- Fig. 11: zeigt eine exemplarische Computer-implementierte Vorrichtung; und
- Fig. 12: zeigt ein exemplarisches System zum Bestimmen eines Degradationsfortschritts.

In den Figuren sind gleiche oder funktionsgleiche Elemente mit denselben Bezugszeichen versehen worden, sofern nichts anderes angegeben ist.

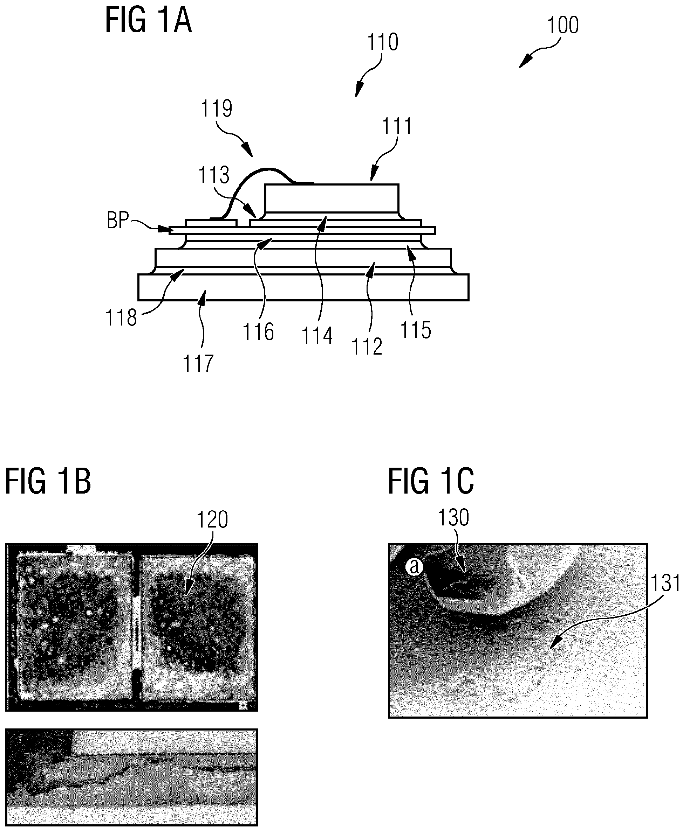

Fig. 1 zeigt einen exemplarischen Querschnitt durch einen IGBT 110, wie dieser z.B. in einem Stromrichter bzw. Umwandler enthalten sein kann.

IGBT besteht aus einem Chip 111, welcher auf einer Basisplatte 112 angeordnet ist. Zwischen dem Chip 111 und der Basisplatte 112 kann eine erste Kupferschicht 113 angeordnet sein, um eine optimale Wärmeleitung zwischen dem Chip 111 und der Basisplatte 112 zu ermöglichen.

Chip 111 kann durch eine erste Lötzinnschicht 114 an der Kupferschicht 113 angebracht sein. Ferner kann die Basisplatte 112 über eine zweite Lötzinnschicht 115 und eine zweite Kupferschicht 116 mit der ersten Kupferschicht 113 verbunden sein.

Ferner kann zwischen der ersten Kupferschicht 113 und der zweiten Kupferschicht 116 eine (kleinere) Basisplatte vorgesehen sein.

Basisplatte 112 kann oberhalb einer Kühlplatte 117 angeordnet sein. Zwischen der Basisplatte 112 und der Kühlplatte 117 kann eine Wärmeleitpasteschicht 118 vorgesehen sein.

Ferner kann eine Oberseite des Chips 111 über einen Bonddraht 119 mit einer Stromversorgung (in Fig. 1 nicht abgebildet) verbunden sein.

Fig. 1B zeigt ferner eine mögliche Degradation eines Stromrichters (Ciappa, M.: "Selected failure mechanisms of modern power modules", Microelectronics Reliability, Vol. 42, Issues 4-5, 2002), welche z.B. durch eine Degradation einer Lötverbindung 120 hervorgerufen werden kann. Derartige Fehler in Lötverbindungen können z.B. durch (thermische) Risse im Lot hervorgerufen werden und/oder durch eine Ablösung der Lötverbindung (z.B. auch durch ein Ablösen eines Bonddrahts von der Oberseite des Chips 112 oder einer Stromversorgung). Eine Degradation einer Lötverbindung kann zu einer schlechteren elektrischen Kontaktierung führen und damit zu einer schlechteren Übertragung elektrischer Energie zum Betrieb von z.B. einem IGBT 110. Dies kann ferner zu einer Erhöhung des thermischen Widerstands führen und damit zu einer Änderung einer Durchlassspannung des IGBT was zu einer unerwünschten Erwärmung des IGBT führen kann und damit eine Degradation des IGBT 110 weiter vorantreiben kann.

Fig. 1C zeigt eine weitere mögliche Degradation des Umrichters (Ciappa, M.: "Selected failure mechanisms of modern power modules", Microelectronics Reliability, Vol. 42, Issues 4-5, 2002), welche z.B. durch eine Ablösung des Bonddrahtes 130 von einer Stromversorgung 131 hervorgerufen werden kann. In einem derartigen Fall kann z.B. eine Kontaktfläche zwischen dem Bonddraht 130 und der Stromversorgung 131 durch die Ablösung des Bonddrahtes 130 verkleinert werden. Dies kann zu einer Erhöhung des Widerstands der leitenden Verbindung zwischen z.B. einem IGBT und einer darunterliegenden Stromversorgung, verstanden werden. Dieser erhöhte Widerstand muss z.B. durch eine Ausgangsstromregelung des IGBT 110 kompensiert werden. Dies kann schließlich zu einer Erwärmung des IGBT 110 beitragen und damit dessen Degradation weiter vorantreiben.

In einigen Fällen kann es auch vorkommen, dass sich ein Bonddraht abhebt. Da in einem Hauptstrompfad meist mehrere Bonddrähte parallel geschaltet sind, führt ein Abheben eines Bonddrahts nicht unmittelbar zu einem Totalversagen des betreffenden IGBTs, jedoch kann sich durch das Abheben der Widerstand der Bondverbindungerhöhen was zu den vorgenannten Folgen führen kann.

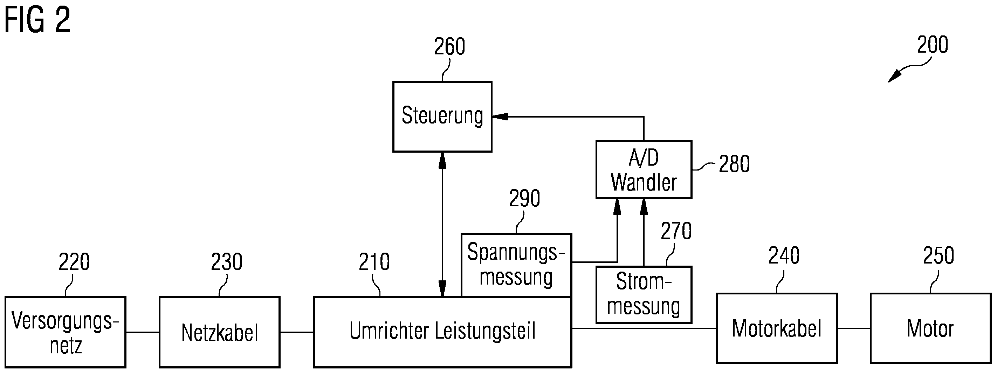

Fig. 2 zeigt ein exemplarisches System 200, welche ein Zusammenwirken eines Stromrichters (auch Umrichter) in einem möglichen erfindungsgemäßen Kontext zeigt.

Unter einem Stromrichter werden vorliegend Vorrichtungen verstanden, welche z.B. Wechselstrom in Gleichstrom umwandeln (Gleichrichter) oder Vorrichtungen, welche einen Gleichstrom in einen Wechselstrom umwandeln (Wechselrichter). Ferner kann unter einem Stromrichter auch ein Umrichter verstanden werden, welcher z.B. als Frequenzumrichter fungieren kann und z.B. eine Änderung einer Wechselstromfrequenz (d.h. einer Umwandlung der Frequenz eines Eingangswechselstroms in eine andere Frequenz eines Ausgangswechselstroms, z.B. über einen intermediären Gleichstrom) bewirken kann.

Das System 200 umfasst einen Umrichter (Leistungsteil) 210. Der Umrichter 210 wird von einem Versorgungsnetz 220 über ein Netzkabel 230 eingangsseitig mit Strom versorgt.

Ausgangsseitig kann der Umrichter 210 über ein Motorkabel 240 mit einem Motor 250 verbunden sein.

Umrichter 210 kann sich ferner mittels Steuerung 260 in einem geschlossenen Regelkreis befinden, welcher konfiguriert ist einen Ausgangsstrom des Umrichters 210 auf einem gewünschten, möglicherweise zeitabhängigen Wert zu halten.

Dies kann dadurch erreicht werden, dass ein Ausgangsstrom des Umrichters 210 durch eine Strommessung 270 gemessen wird (z.B. durch Messen eines um ein Kabel (z.B. Motorkabel 240) hervorgerufenen Magnetfelds). Das Resultat der Strommessung 270 kann eine zum Ausgangsstrom proportionale Spannung (z.B. proportionale Ausgangsspannung) sein, welche einem A/D Wandler 280 zugeführt werden kann.

A/D Wandler 280 kann dazu eingerichtet sein, die analoge Ausgangsspannung zu digitalisieren und damit in ein digitales Messsignal umzuwandeln.

Bevorzugt erfüllt die Abtastrate des A/D Wandlers 280 zumindest das Nyqvist-Kriterium. In einigen beispielhaften Fällen, wie hierin beschrieben, kann jedoch auch eine Überabtastung des Ausgangsstroms mittels A/D Wandler 280 vorgenommen werden.

In einigen Fällen kann auch eine dedizierte Spannungsmessung 290 (z.B. eine direkte Ausgangsspannung) vorgesehen sein. In einem derartigen beispielhaften Anwendungsfall kann der A/D Wandler 280 auch direkt die betreffende Ausgangsspannung abtasten.

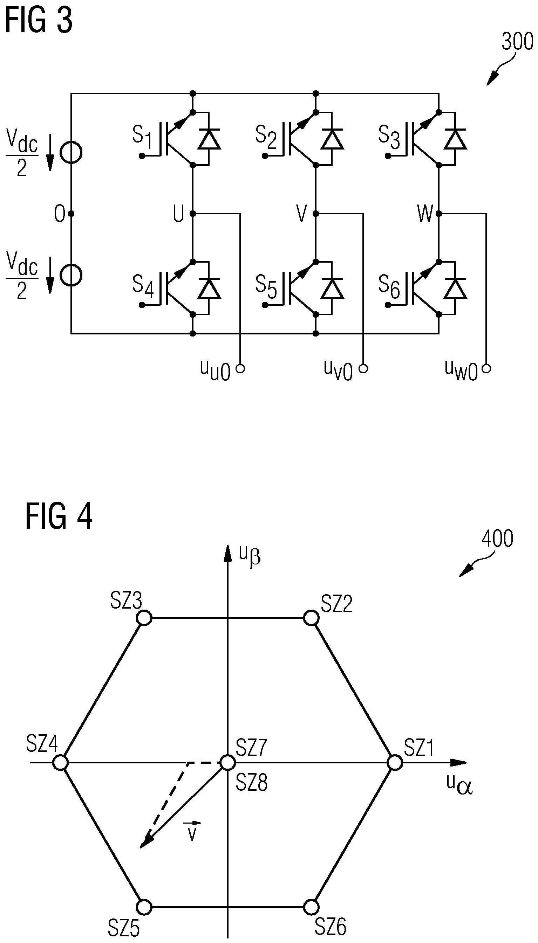

Fig. 3 zeigt ein exemplarisches Ersatzschaltbild einer Drehstrombrückenschaltung 300 gemäß Aspekten der vorliegenden Erfindung.

Drehstrombrückenschaltung 300 umfasst drei in einer oberen Hälfe der Drehstrombrückenschaltung 300 angeordnete Halbleitermodule S₁-S₃.

Drehstrombrückenschaltung 300 umfasst drei in einer unteren Hälfte der Drehstrombrückenschaltung 300 angeordnete Halbleitermodule S₄-S₆.

Alle oder zumindest einige der Halbleitermodule S₁-S₆ können als IGBTs bereitgestellt werden. Parallel zu jeder der IGBTs (welche als Transistoren dargestellt sind) kann eine jeweilige Diode geschaltet werden.

Drehstrombrückenschaltung wird vorliegend mit einer Gleichspannungsquelle V_{DC} betrieben.

Drehstrombrückenschaltung 300 umfasst ferner drei Klemmen uᵤ₀, uᵥ₀ und u_{w0}, über die eine 3-phasige Last an einen Ausgang der Drehstrombrückenschaltung 300 angeschlossen werden kann. Es sei jedoch darauf hingewiesen, dass auch Implementierungen mit weniger als drei Phasen oder Implementierungen mit mehr als drei Phasen möglich sind.

Ein Einschalten der oberen Halbleitermodule S₁-S₃ kann dazu führen, dass die drei Klemmen uᵤ₀, uᵥ₀ und u_{w0} mit einem positiven Zwischenkreispotential verbunden werden, wobei die Klemmen uᵤ₀, uᵥ₀ und u_{w0} jeweils an den entsprechenden Knoten U, V, W abgegriffen werden.

Analoges gilt für ein negatives Zwischenkreispotential, wenn die jeweiligen in der unteren Hälfte der Drehstrombrückenschaltung 300 angeordneten Halbleitermodule S₄-S₆ eingeschaltet werden.

Um einen Kurzschluss zu vermeiden, ist es von Bedeutung, die in der oberen Hälfte der Drehstrombrückenschaltung 300 angeordneten Halbleitermodule S₁-S₃ nicht gleichzeitig mit den in der unteren Hälfte der Drehstrombrückenschaltung 300 angeordneten Halbleitermodule S4-S6 zu betreiben. Ein paralleler Betrieb von Halbleitermodulen einer der beiden Hälften ist hingegen möglich. In einem derartigen Fall entscheidet das Stromvorzeichen einer jeweiligen Phase, ob ein negatives oder positives Zwischenkreispotential mit den Klemmen uᵤ₀, uᵥ₀ und u_{w0} verbunden ist.

Während einer mechanischen und/oder elektronischen Periode (Fundamentalperiode) können sich Szenarien ergeben, in welchen Gruppen von Halbleitermodulen für gewisse Zeitabschnitte für längere Zeiten beschaltet werden als dies für andere Gruppen von IGBTs der Fall sein kann. Dies kann sowohl in einer "two level" (Spannung kann zwischen zwei Werten geschaltet werden, wie z.B. ± *V_{DC}*/2) als auch in einer "multilevel" (Spannung kann zwischen mehr als zwei Werten geschaltet werden, wie z.B. drei Werten) Topologie auftreten.

Da Halbleitermodule meist gruppenweise beschaltet werden, können sich so zeitliche Sektoren ergeben, sodass ein von dem Stromrichter ausgegebenes Signal aus einer Superposition der jeweils beschalteten Halbleitermodulen ergibt. Eine Degradation eines Halbleitermoduls kann zu einer Veränderung der Perioden(-dauer, z.B. im Bereich einer Halbperiode oder Viertelperiode) führen, was durch eine einen Ausgang des Stromrichters regelnde Elektronik ausgeglichen werden muss und sich somit z.B. in einem P- und/oder I-Signals eines PI-Reglers widerspiegeln kann.

Es sei ferner angemerkt, dass jede einzelne Phase zwei verschiedene diskrete Schaltzustände (ein/aus) annehmen kann. Wird von drei Phasen ausgegangen, so ergeben sich insgesamt 2³ = 8 Schaltzustände.

Ein sequentielles Beschalten der Halbleitermodule der Drehstrombrückenschaltung 300 führt zu einem Durchlaufen von insgesamt sechs Schaltzuständen, welche in Form eines αβ-Diagramms 400 dargestellt werden können, wie in Fig. 4 dargestellt.

Fig. 4 zeigt ein αβ-Diagramm 400 umfassend einen Vektor *̅v̅*̅ welcher in der αβ-Ebene rotiert und mit Hilfe der Schaltzustände SZ1-SZ6 nachgebildet wird, wobei jeder der Schaltzustände SZ1-SZ6 dem Beschalten eines respektiven Halbleitermoduls S₁-S₆ entspricht.

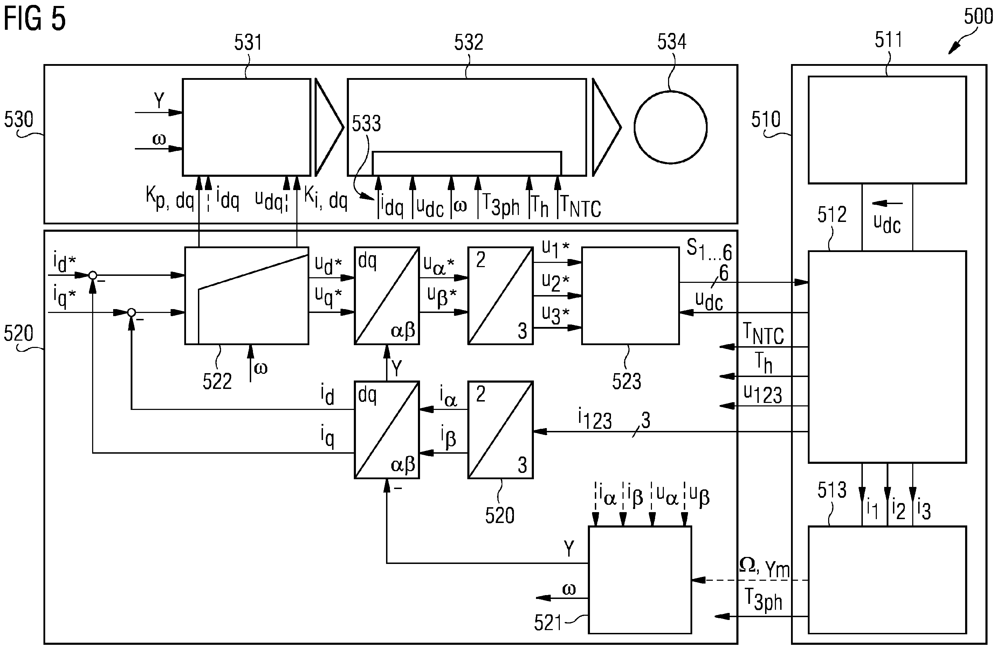

Fig. 5 zeigt einen Signalflussplan 500 eines Zusammenwirkens eines physischen Systems 510, eines Regelungssystems 520 sowie eines parallel zum Regelungssystems 520 geschalteten Condition Monitoring Systems 530.

Das physikalische System 510 kann dabei ein DC-System 511 umfassen. DC-System 511 kann zum Einsatz zusammen mit einem Stromrichter für ein elektrisches Antriebssystem bereitgestellt sein, welcher in der Regel eine Zwischenkreisspannung über eine Einspeisung zur Verfügung stellt (Diodengleichrichter, Active Front End (AFE), also einer aktiven Einspeisung, die aus einem Drehstromnetz einen Gleichspannungszwischenkreis zur Verfügung stellen kann).

Grundsätzlich ist jedoch auch jede andere DC-Quelle bzw. -Last implementierbar, wie z.B. eine DC-Ladesäule oder ein Photovoltaik-Feld, etc. Die hierin diskutierten Ausführungen können z.B. auch auf AC-AC Umrichter (z.B. Matrixumrichter) angewendet werden.

Die von dem DC-System 511 zur Verfügung gestellte Spannung U_{DC} kann an einen Stromrichter 512 bzw. eine entsprechende Leistungselektronik zur Verfügung gestellt werden. Der Stromrichter 512 kann dabei z.B. als eine Drehstrombrückenschaltung (z.B. die Drehstrombrückenschaltung 300) bereitgestellt werden. Der Stromrichter 512 bzw. die Leistungselektronik besteht dabei nicht alleinig aus der Drehstrombrückenschaltung, sondern kann auch Sensoren zur Strommessung, Temperaturüberwachung, Spannungsmessung, etc. umfassen. Diese Sensoren können zusätzlich in das datenbasierte Condition Monitoring eingebunden werden.

Mit einem Ausgang des Stromrichters 512 ist schließlich ein drei-phasiges AC-System 513 verbunden, welches z.B. durch die drei Phasen i₁, i₂ und i₃ mit dem Stromrichter 512 verbunden sein kann, welche durch den Stromrichter 512 erzeugt wurden.

Das drei-phasige AC-System 513 kann als ein Elektromotor bzw. eine Asynchronmaschine oder eine Synchronmaschine bereitgestellt werden.

In einigen Fällen kann das drei-phasige AC-System 513 jedoch auch ein drei-phasiges elektrisches Netz sein.

Regelungssystem 520 kann auf einer feldorientierten Regelung (auch Vektorregelung) basieren. Bei der feldorientierten Regelung werden sinusförmige - oder als weitgehend sinusförmig angenommene - Wechselgrößen (beispielsweise Wechselspannungen und Wechselströme) nicht direkt in ihrem zeitlichen Momentanwert, sondern in einem um den Phasenwinkel innerhalb der Periode bereinigten Momentanwert geregelt. Zu diesem Zweck werden die erfassten Wechselgrößen jeweils in ein mit der Frequenz der Wechselgrößen rotierendes Koordinatensystem übertragen. Innerhalb des rotierenden Koordinatensystems ergeben sich dann aus den Wechselgrößen Gleichgrößen, auf die alle üblichen Verfahren der Regelungstechnik angewandt werden können.

In einer möglichen Implementierung kann dabei eine Transformation von Strommesswerten in ein (Rotor-) Flussbasiertes Koordinatensystems (dq-System) erfolgen. Ferner kann sich daran eine entkoppelte Regelung des feldbildenden Stroms (ausgedrückt durch die d-Achse) und des drehmomentbildenden Stroms (ausgedrückt durch die q-Achse) anschließen. Für jede der beiden Koordinatenachsen (d und q) kann ein entsprechender PI-Regler vorgesehen werden.

Ein Transformationswinkel des flussbasierten Koordinatensystems kann je nach Anwendungsfall direkt gemessen oder über eine Modellierung geschätzt werden, wie dies durch Flusswinkelbestimmungseinheit 521 ermöglicht werden kann.

Bei Asynchronmaschinen kann das Spannungs-/Strommodell auf Messgrößen basieren, bei Synchronmaschinen kann eine direkte Messung der Rotorlage erfolgen, bei einem elektrischen Netz kann ein Spannungsmodell bzw. eine Phasenregelschleife (engl.: *phase locked loop* (PLL)) basierend auf Messgrößen implementiert werden.

Durch einen Regelungsblock 522 kann aus einer Regelabweichung (z.B. durch einen Soll-/Istwertvergleich) eine Sollspannung berechnet werden, welche vom Stromrichter 512 ausgeben werden muss, um die Regelabweichung zu minimieren, idealerweise auf null zu setzen. Die so bestimmte Sollspannung kann aus dem flussbasierten Koordinatensystem rücktransformiert werden und als Spannungssollwerte für die drei Phasen des betrachteten Systems verwendet werden.

Innerhalb des Modulators 523 können aus den Sollspannungen zusammen mit einer gemessenen Zwischenkreisspannung die Schaltzeitpunkte für die Leistungshalbleiter berechnet und als Ansteuersignale an den Stromrichter übergeben werden.

Strom i₁₂₃ kann für die Stromregelung in das dq-System überführt werden und die eigentliche Stromregelung im dq-System ausgeführt werden. Nach Berechnung der eigentlichen Regelungsgrößen kann eine Rücktransformation in ein physischen System erfolgen um die eigentliche Regelung ausführen zu können.

Das Condition Monitoring 530 kann derart bereitgestellt werden, dass es die verfügbaren Mess- und/oder Reglergrößen auswerten kann. Dies kann z.B. einen P- und/oder I-Teil der beiden Pl-Regler umfassen, gemessene Ströme und/oder gemessene Spannungen. Diese können jeweils als zeitlicher Verlauf erfasst worden sein.

In einem ersten Schritt können in einer Fenster- bzw. Analyseeinheit 531 die verfügbaren Daten mittels eines auf eine elektrische oder mechanische Periode abgestimmten Fensters (z.B. durch Falten mit einer Fensterfunktion) vorbearbeitet werden. Hieran anschließen kann sich das Ausführen einer Frequenzanalyse, z.B. das Ausführen einer FFT, einer Fourier-Serie, etc. Hieraus können dazugehörige Fourierkoeffizienten (Amplitude und Phasenlage) der im Signal des erfassten zeitlichen Verlaufs enthaltenen Oberwellen.

Das Ausführen einer derartigen Frequenzanalyse kann zyklisch und damit wiederholt ausgeführt werden. Dies kann ein Überwachen einer möglichen Änderung der Fourierkoeffizienten im Zeitverlauf ermöglichen.

Basierend hierauf kann mittels einer Condition Monitoring Überwachungseinheit 532 ein Bestimmen erfolgen, z.B. durch Vergleichen der Fourierkoeffizienten mit Referenz-Fourierkoeffizienten, ob ein Voranschreiten des Degradationsfortschritts erfolgt ist.

Zusätzlich können in das datenbasierte Condition Monitoring weitere Umweltbedingungen 533 mit einfließen (z.B. eine Luftfeuchtigkeit, Umgebungstemperatur, etc.). Bei gleichbleibenden Umweltbedingungen kann aus einer Veränderung der Fourierkoeffizienten so auf ein Voranschreiten einer Degradation geschlossen werden, wodurch auf einen beginnenden Fehler im betrachteten System geschlossen werden kann. In anderen Worten, typische Fehlerbilder in Drehstrombrückenschaltungen können typischerweise zu entsprechenden Signaturen in den untersuchten höheren Harmonischen führen.

Basierend hierauf kann Überwachungseinheit 532 dann einen Gesundheitszustand 534 (engl.: *state of health* (SOH)) des betrachteten Systems bestimmen.

Wird eine Phasenlage der betrachteten höheren Harmonischen bestimmt, so kann eine Fehlerlokalisation dahingehend erfolgen, welches der Halbleitermodule möglicherweise von einem Fehler bzw. Ausfall betroffen ist, wie oben bereits beschrieben.

Es sei angemerkt, dass das Condition Monitoring 530 physisch in dem physischen System 510 enthalten sein kann (z.B. als Teil des drei-phasigen AC-Systems 513; in einigen Fällen kann das Condition Monitoring 530 auch Teil des Regelungssystems 520 sein und dort z.B. als Softwareeinheit implementiert sein). Alternativ kann es auch möglich sein, dass das Condition Monitoring 530 in einer entfernten Entität (z.B. als Cloud-Dienst, als Edge-Gerät, etc.) vorgehalten wird, welche z.B. mit dem physischen System 510 und/oder dem Regelungssystem 520 in Kommunikationsverbindung steht.

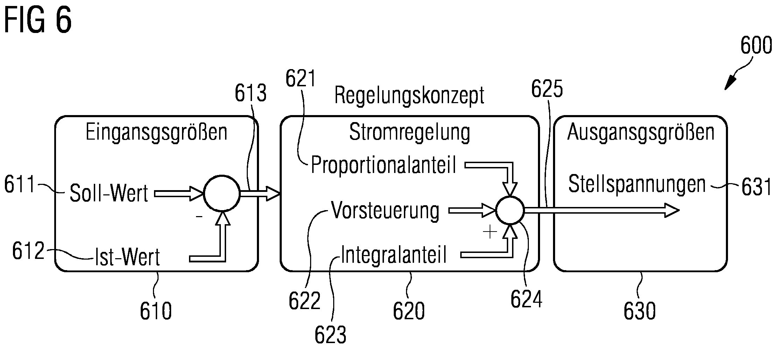

Fig. 6 zeigt eine schematische Darstellung eines Vorsteuerungs-basierten Regelungskonzepts 600 gemäß Aspekten der vorliegenden Erfindung.

Das Vorsteuerungs-basierte Regelungskonzept 600 kann z.B. die Steuerung 260, wie oben mit Bezug zu Fig. 2 beschrieben, repräsentieren.

Das Vorsteuerungs-basierte Regelungskonzept 600 umfasst eine Verwendung von Eingangsgrößen 610, einer Stromregelung 620 sowie ein Bereitstellen von Ausgangsgrößen 630.

Eingangsgrößen 610 setzen sich aus einem Soll-Wert 611 und einem Ist-Wert 612 zusammen. Soll-Wert 611 kann z.B. einen gewünschten Wert einer Amplitude des Ausgangsstroms und/oder einer Ausgangsspannung beschreiben, d.h. einen Wert einer Amplitude, welchen der Ausgangsstrom und/oder einer Ausgangsspannung bevorzugt annehmen sollte. Ist-Wert 612 kann hingegen eine Amplitude des Ausgangsstroms und/oder der Ausgangsspannung beschreiben, welche durch den erfassten zeitlichen Verlauf gewonnen wurde.

Aus Sollwert 611 und Ist-Wert 612 kann eine Differenz 613 bestimmt werden.

Die Differenz 613 kann der Stromregelung 620 zugeführt werden.

Stromregelung 620 kann sich aus einem Proportionalanteil 621, einem Vorsteueranteil 622 sowie einem Integralteil 623 zusammensetzen. In einigen Fällen (nicht in Fig. 6 gezeigt), kann Stromregelung 620 auch einen differenziellen Anteil umfassen.

Stromreglung 620 kann die Differenz 613 mit einem vorbestimmten Proportionalitätsfaktor multiplizieren, um den Proportionalanteil 621 zu erhalten.

Stromregelung 620 kann ein mehrere, hintereinander erfasste zeitliche Verläufe aufintegrieren und das so erhaltene Integral mit einem Integralfaktor multiplizieren, um den Integralanteil 623 zu erhalten.

Vorsteuerung 622 kann einen Steuerbeitrag liefern, welcher keine explizite Behandlung mittels der Proportional- bzw. Integralarithmetik der Stromregelung 620 erfordert, da z.B. für eine bestimmte Different 613 eine optimale Reaktion (im Sinne des Bestimmens einer Regelungsgrö-ße) bereits vorab bekannt ist (z.B. basierend auf dem Verwenden eines Fehlerspeichers) und keiner explizite Berechnung bedarf.

Als Teil der Stromregelung 620 kann ferner eine Addition 624 des Proportionalanteils 621, der Vorsteuerung 622 sowie des Integralanteils 623 erfolgen, um so eine Regelungsgröße 625 zu erhalten.

Regelungsgröße 625 kann ferner als Ausgangsgröße 630 weiterverwendet oder umgewandelt werden. Typischerweise kann Regelungsgröße 625 in eine Stellspannung 631 als Ausgangsgröße 630 umgewandelt werden. Stellspannung 631 kann erneut dem Stromrichter (z.B. Umrichter 210 wie mit Bezug zu Fig. 2 beschrieben) zugeführt werden, um die Ausgangsspannung und/oder den Ausgangsstrom des Stromrichters auf einen vorbestimmten Soll-Wert (z.B. Soll-Wert 611) anzupassen oder zumindest diesem anzunähern und damit die Differenz 613 zu minimieren.

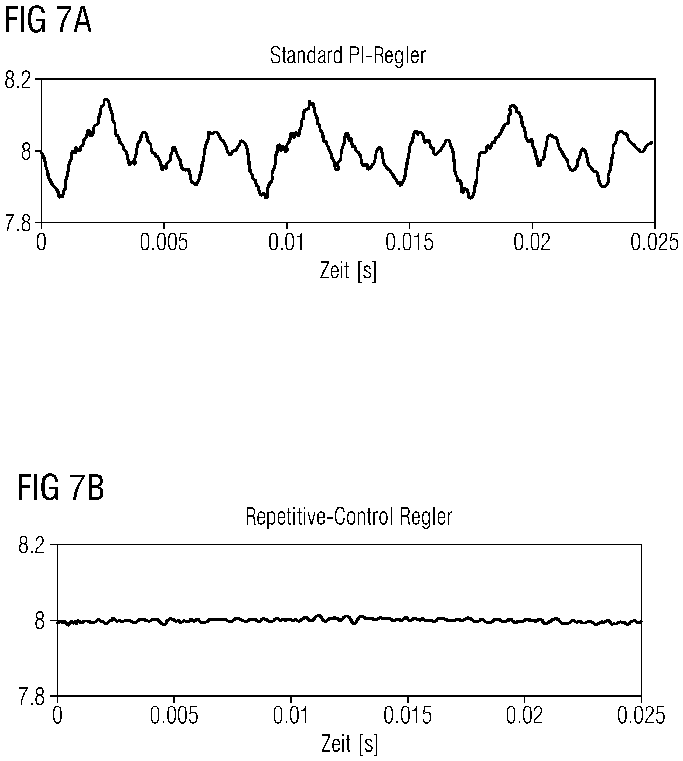

Fign. 7A und 7B zeigen eine exemplarische Gegenüberstellung eines zeitlichen Verlaufs eines Ausgangsstroms, welcher mit einer standard PI-Regelung geregelt wurde (Fig. 7A), während Fig. 7B einen zeitlichen Verlauf eines Ausgangsstroms zeigt, welcher mit einer Fehlerspeicherbasierten Regelung (z.B. mittels eines Repetitive Control Reglers) geregelt wurde, zeigt.

Wie aus Fig. 7A ersichtlich, unterliegt der geregelte zeitliche Verlauf des Stroms einem periodischen Muster (mit einer Periodendauer von ca. 8 ms). Zusätzlich zeigt der zu regelnde Strom eine Schwankungsbreite der zu regelnden Amplitude von ca. 0,3 A (peak-to-peak).

Dies kann z.B. dadurch verursacht werden, dass die zugrundeliegende Schwankung im erfassten zeitlichen Verlauf zumindest eine Signalkomponente aufweist, welche mit einer Frequenz auftritt, welche durch die verwendete PI-Regelung nicht vollständig ausgeregelt werden kann. Dies kann z.B. dann auftreten, wenn der I-Anteil der PI-Regelung mit einer Integrationszeitkonstante assoziiert ist (bevorzugt in einem dq-Koordinatensystem, wobei eine praktische Validierung an einer passiven RL-Last bei einer festen Frequenz erfolgt), welche die Periodizität des zeitlichen Verlaufs der zu regelnden Signalkomponente überschreitet.

Zusätzlich oder alternativ kann eine unzureichende Regelung der PI-Regelung, bzw. insbesondere des I-Anteils der PI-Regelung auch dadurch verursacht werden, dass im zu regelnden Signal Signalkomponenten vorhanden sind, welche einer steilen Steigung bzw. Sprüngen (z.B. einem Stufenantwortverhalten) unterworfen sind. In einem derartigen Fall kann sich ebenfalls eine Situation ergeben, in welcher der I-Anteil auf Grund seines Zeitverhaltens, eine Ausregelung der jeweiligen Signalkomponente nicht mehr ausreichend sicherstellen kann. In einem derartigen Fall kann eine zufriedenstellende Regelung des Stroms nicht unter allen Umständen sichergestellt und erreicht werden.

Fig. 7B zeigt hingegen ein Anwendungsbeispiel, in welchem der Strom mittels eines Repetitive Control Reglers geregelt wurde.

Hierbei zeigt sich, dass das in Fig. 7A gezeigte periodische Verhalten ausgeregelt werden konnte und die Amplitudenschwankung (peak-to-peak) auf weniger als 0,1 A reduziert werden konnte.

Das Konzept eines Repetitive Control Reglers kann darauf basieren, dass für eine bestimmte Differenz zwischen Soll-Wert und Ist-Wert (und/oder für eine bestimmte Steigung des zu regelnden Signals) bereits bekannt ist, welche Regelungsgröße (z.B. welche Stellspannung) verwendet werden sollte, um die bestimmte Differenz zu minimieren bzw. zu Nullen. Auf diese Weise kann auch für höherfrequente Signalkomponenten, welche z.B. durch den I-Anteil einer PI-Regelung nicht ausreichend ausgeregelt werden können, eine ausreichende Regelung ermöglicht werden kann.

Der Repetitive Control Regler kann in einigen Fällen den Integralteil des Reglers ersetzen.

Kernelement des Repetitive Control Reglers kann ein Fehlerspeicher über den elektrischen Winkel sein, wobei in jedem Rechenschritt aus dem Stromfehler *eᵢ* die Fehlspannung *eᵤ* berechnet werden kann, die zu der Abweichung geführt hat. Diese Spannung kann an der aktuellen Winkelstützstelle abgespeichert werden und ggf. interpoliert werden.

In nachfolgenden elektrischen Perioden kann der Regler an dem entsprechenden Winkel die Fehlspannung aus dem Fehlerspeicher auslesen und direkt vorsteuern. Um die Stabilität zu erhöhen, kann die Fehlspannung über einen Dämpfungsfaktor *Kᵢ* aufgeschaltet werden. Nach einigen elektrischen Perioden (z.B. zumindest zwei, drei, vier, fünf, zehn oder mehr) kann der Fehlerspeicher eingeschwungen sein und gegen den Endwert konvergieren.

Oberschwingungen im Strom können nahezu vollständig eliminiert werden - die Oberschwingungen können anschließend komplett im Fehlerspeicher enthalten sein.

Ein Repetitive Control Regler bietet im vorliegenden Fall insbesondere den Vorteil, dass Fehlspannungen örtlich (bzw. im Winkel) exakt zugeordnet werden können, da die Regelung im Zeit-/Winkelbereich erfolgt.

Der Repetitive Control Regler kann es verhindern, dass eine Phasenverschiebung des Integralteils durch direkte Vorsteuerung erfolgt.

Der Strom kann glatt eingeregelt werden, sodass alle Fehlspannungen im Fehlerspeicher enthalten sein können. Dies kann es ermöglichen, dass tendenziell höhere Ausgangsamplituden erreicht werden können und diese einfacher zu detektieren sein können.

Eine Verkopplung zwischen Strom- und Spannungsharmonischen kann ferner verhindert werden.

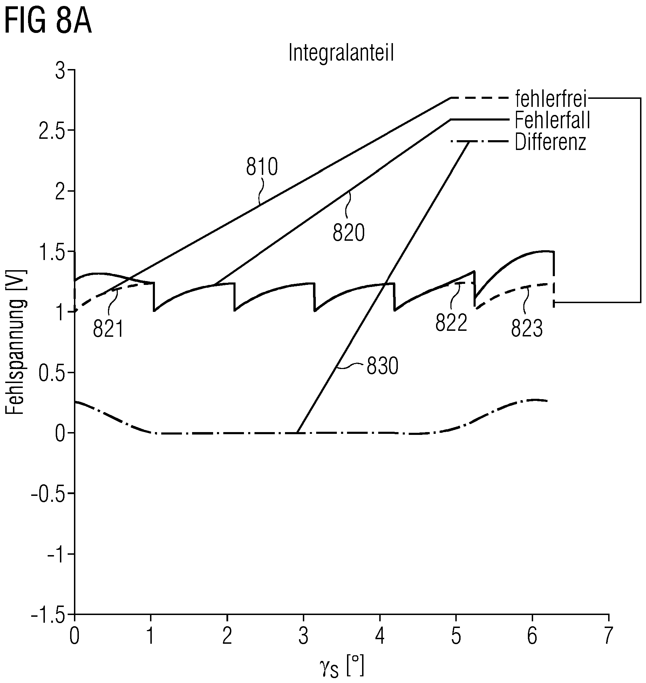

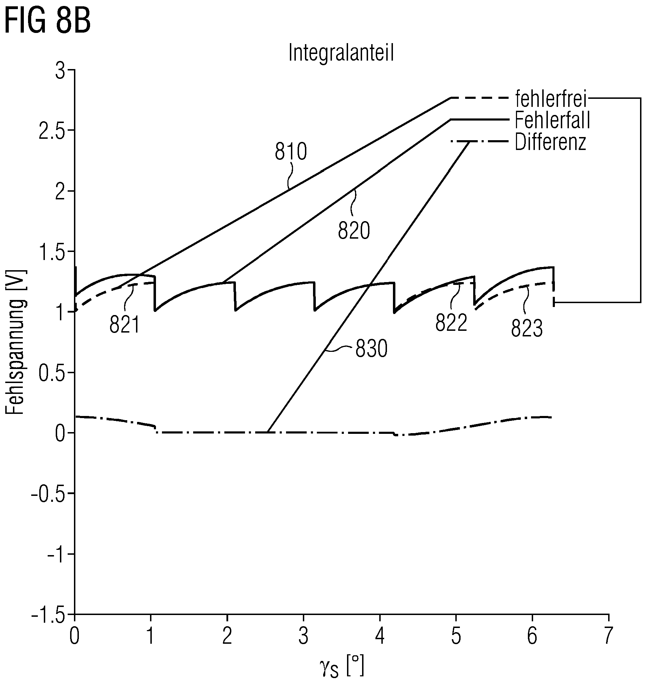

Fign. 8A und 8B zeigen ein exemplarisches Auftreten einer Fehlspannung in V für den Fall eines Ablösens eines Bonddrahts von einem integrierten Schaltkreis (Bond-Wire-Lift-Off, Fig. 8A) sowie einer Ermüdung einer Lötstelle (Fig. 8B) für verschiedene Phasenabschnitte (in rad).

Fig. 8A stellt einen exemplarischen fehlerfreien Spannungsverlauf 810, welcher z.B. als Ausgangsspannung eines Stromrichters auftreten kann, gegenüber einer Phasendarstellung in rad dar.

Die Phasendarstellung kann sich dabei auf die sequentielle Beschaltung von Halbleitermodulen (z.B. IGBTs) in dem Stromrichter beziehen. Dies bedeutet, dass eine Phase von 1 rad indikativ ist, für die Beschaltung eines ersten Halbleitermoduls des Stromrichters, während eine Phase von 2 rad indikativ ist für die Beschaltung eines zweiten Halbeitermoduls des Stromrichters, usw. Das vorliegend, in Fign. 8A und 8B gezeigte Beispiel zeigt somit also jeweils die serielle Beschaltung von sechs Hableitermodulen.

Fign. 8A und 8B zeigen ebenfalls, dass sich nach jedem Wechsel des jeweils beschalteten Halbleitermoduls ein Abfall der Ausgangsspannung einstellt, welche dann wieder ansteigt und dabei einem Sättigungsverhalten folgt.

Die jeweils für den fehlerfreien Spannungsverlauf 810 gezeigten Spannungswerte können als Soll-Werte verstanden werden, da sie mit erwünschten Soll-Ausgangsspannungen des Stromrichters assoziiert sind.

Liegt eine Degradation des Stromrichters (bzw. eines der darin enthaltenen Halbleitermoduls) vor, wie dies z.B. durch den fehlerbehafteten Spannungsverlauf 820 repräsentiert, so zeigt sich, dass nicht in allen Fällen, d.h. nicht für alle Phasen, die entsprechenden Soll-Werte erreicht werden, sondern dass die tatsächlichen Ist-Werte kleiner ausfallen, z.B. für die Phasenabschnitte 821, 822 und 823.

Durch Subtrahieren des fehlerbehafteten Spannungsverlaufs 820 von dem fehlerfreien Spannungsverlauf 810 kann eine Differenz(-spannung) 830 erhalten werden, welche die jeweilige durch die Degradation des Stromrichters hervorgerufene Spannungsänderung anzeigt.

Da mit dem sequentiellen Beschalten der Halbleitermodule ein Sprungantwortverhalten der Ausgangsspannung einhergeht, sind diese meist durch einen I-Anteil einer PI-Regelung nur unzureichend bzw. nicht regelbar bzw. nicht kompensierbar (wie oben beschrieben). Es kann daher vorliegend auf einen Fehlerspeicher zurückgegriffen werden, um eine Regelungsgröße zu bestimmen, mit Hilfe welcher ein Kompensieren des Sprungantwortverhaltens ermöglicht werden kann. Zusätzlich kann der Fehlerspeicher auch dazu benutzt werden, die Differenz 830 zu kompensieren.

Zumindest teilweise basierend auf der so bestimmten Regelungsgröße kann durch Vergleichen der Regelungsgröße mit einer Referenzregelungsgröße auf eine Degradation bzw. einen Degradationsfortschritt des Stromrichters bzw. darin enthaltener Halbleitermodule geschlossen werden.

In einigen Fällen kann zwischen dem Voranschreiten der Degradation und der entstehenden Fehlspannung eine Proportionalität vorliegen (direkt oder indirekt). In einigen Fällen kann die Fehlspannung linear, quadratisch, kubisch, etc. mit dem Degradationsfortschritt skalieren. In einigen Fällen kann zusätzlich oder alternativ auch ein anderer funktionaler Zusammenhang zwischen dem der Fehlspannung und dem Degradationsfortschritt des Stromrichters vorhanden sein.

Da versucht wird, eine resultierende Fehlspannung für jedes der Halbleiterbauelemente zu kompensieren, kann dies als winkelabhängige Regelung verstanden werden.

Für Fig. 8B lassen sich die mit Bezug zu Fig. 8A beschriebenen Aspekte analog anwenden.

Insbesondere ist durch eine Auswertung des Fehlerspeichers in einem Repetitive Control Regler der Informationsgehalt der beobachteten Größe nicht mehr unscharf zeitabhängig, sondern an die Periodizität einer Last angepasst und nur noch abhängig vom Winkel. Insbesondere bei variabler Frequenz (z.B. bei einer drehzahlvariablen Maschine) ist dies von Vorteil. Die Verwendung des neuen Regelansatzes führt zu glatten dq-Strömen, so dass das gesamte Oberwellenspektrum im Fehlerspeicher des Reglers enthalten ist. Dies kann das Tracking bzw. die Fehlerlokalisation für das nachgeschaltete Condition Monitoring Verfahren vereinfachen.

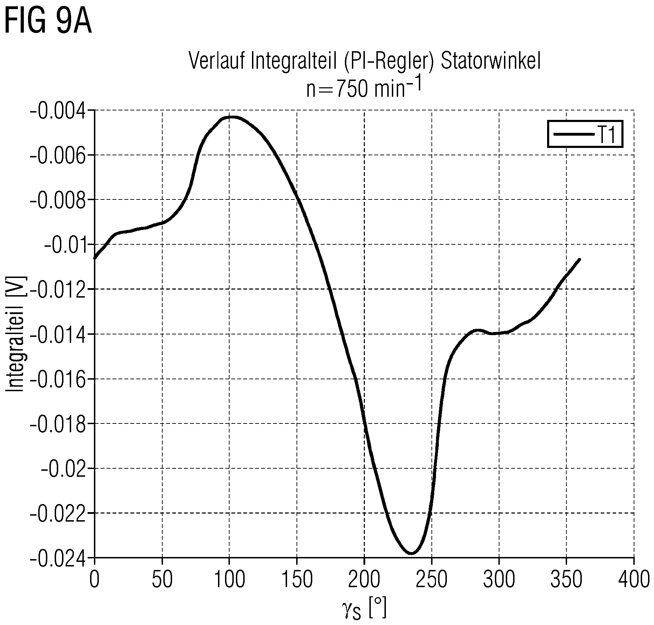

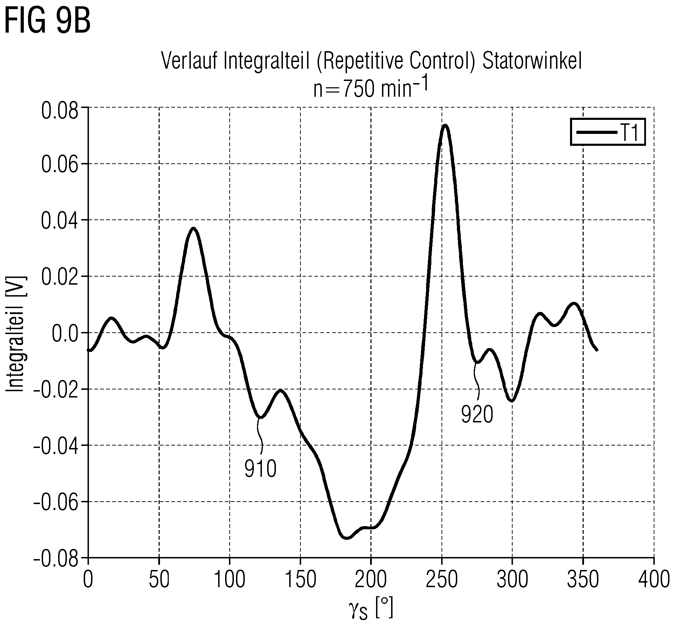

Fign. 9A und 9B zeigen einen Vergleich eines Differenzsignals des Integralteils zwischen einem als gesund anzusehenden Stromrichter (d.h. keine wesentliche Degradation) und einem als geschädigt anzusehenden Stromrichter (d.h. ein Voranschreiten der Degradation liegt vor) für eine Regelung einer Ausgangsspannung mittels eines PI-Reglers (Fig. 9A) und mittels eines Repetitive Control Reglers (Fig. 9B).

Gemäß Fig. 9A, führt die Verwendung eines PI-Reglers zu tendenziell sehr geringen Ausgangsspannungen (z.B. im Bereich von -0,024 V bis -0,004 V) am Ausgang des PI-Regler. Durch die Zeitkonstante des I-Anteils können periodische Abweichungen (wie z.B. aus Fig. 7A ersichtlich) nur langsam aufaddiert werden. Bis in einem derartigen Szenario die volle Spannung erreicht wäre, kann sich das elektrische Antriebsmittel bereits weitergedreht haben. Der Repetitive Control Regler speichert die Spannungen, wie sie wirklich angelegt werden müssten - daher kann die Amplitude in der Regel höher ausfallen und im Winkel feiner aufgelöst werden.

Im Vergleich zum in Fig. 9A gezeigten Fall, zeigt Fig. 9B, dass bei Verwendung eines Repetitive Control Reglers höhere Ausgangsspannungen (z.B. im Bereich von -0,08 V bis 0,08 V) am Ausgang des Repetitive Control Regler erreicht werden können, als dies z.B. bei einem PI-Regler der Fall ist. Insbesondere wird in Fign. 9A und 9B jeweils nur der I-Anteil der Regelung betrachtet. Der P-Anteil ist als paralleler Zweig jedoch auch noch aktiv. Im eingeschwungenen Zustand, wie er hier vorliegt, sind können alle Spannungskomponenten im I-Anteil des Reglers enthalten sein.

Ferner zeigt der in Fig. 9B gezeigte Fall klar lokalisierte Fehlerwinkel, einmal beim Leiten der Diode in der negativen Halbwelle (z.B. Position 910), einmal beim Leiten des IGBTs in der positiven Stromhalbwelle (z.B. Position 920).

In einigen Fällen kann der erfasste zeitliche Verlauf auch dazu benutzt werden, eine Fourieranalyse (z.B. durch Fouriertransformation des erfassten zeitlichen Verlaufs auszuführen) und basierend darauf eine Amplitudenveränderung einer höheren Harmonischen zu bestimmen, welche indikativ für ein Fortschreiten des Degradationsfortschritts sein kann. Umfasst der Stromrichter z.B. mehrere Halbleiterbauelemente, so kann es möglich sein, für jedes der Halbleiterbauelemente einen zeitlichen Verlauf zu bestimmen (z.B. sequentiell) und basierend auf einem Bestimmen resultierender Amplituden der höheren Harmonischen und/oder der zeitlichen Entwicklung der erfassten zeitlichen Verläufe relativ zueinander auf eine Phasenlage schließen zu können. Diese Phasenlage kann es ermöglichen, auf ein konkret degradiertes Halbleitermodul schließen zu können, welches z.B. einer Degradation unterworfen ist.

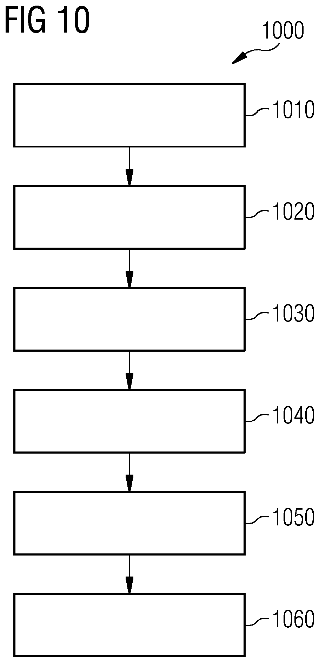

Fig. 10 zeigt ein Ablaufdiagramm eines exemplarischen Computer-implementierten Verfahrens 1000 zum Bestimmen eines Degradationsfortschritts eines Stromrichters gemäß einem Aspekt der vorliegenden Erfindung.

In Schritt 1010 erfolgt Erfassen eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist.

In Schritt 1020 erfolgt ein Bestimmen einer Amplitude des Ausgangsstroms und/oder der Ausgangsspannung basierend auf dem erfassten zeitlichen Verlauf.

In Schritt 1030 erfolgt ein Bestimmen einer Differenz zwischen der bestimmten Amplitude und einer vorbestimmten Referenzamplitude.

In Schritt 1040 erfolgt ein Bestimmen einer Regelungsgröße, zumindest teilweise basierend auf von einem Fehlerspeicher erhaltenen Daten, zum Zuführen an den Stromrichter, um die bestimmte Differenz zu minimieren.

In Schritt 1050 erfolgt ein Bereitstellen einer Referenzregelungsgröße, welche mit einem Degradationsfortschritt des Stromrichters assoziiert ist.

In Schritt 1060 erfolgt ein Bestimmen, zumindest teilweise basierend auf einem Vergleichen der bestimmten Regelungsgröße mit der Referenzregelungsgröße, eines Degradationsfortschritts des Stromrichters.

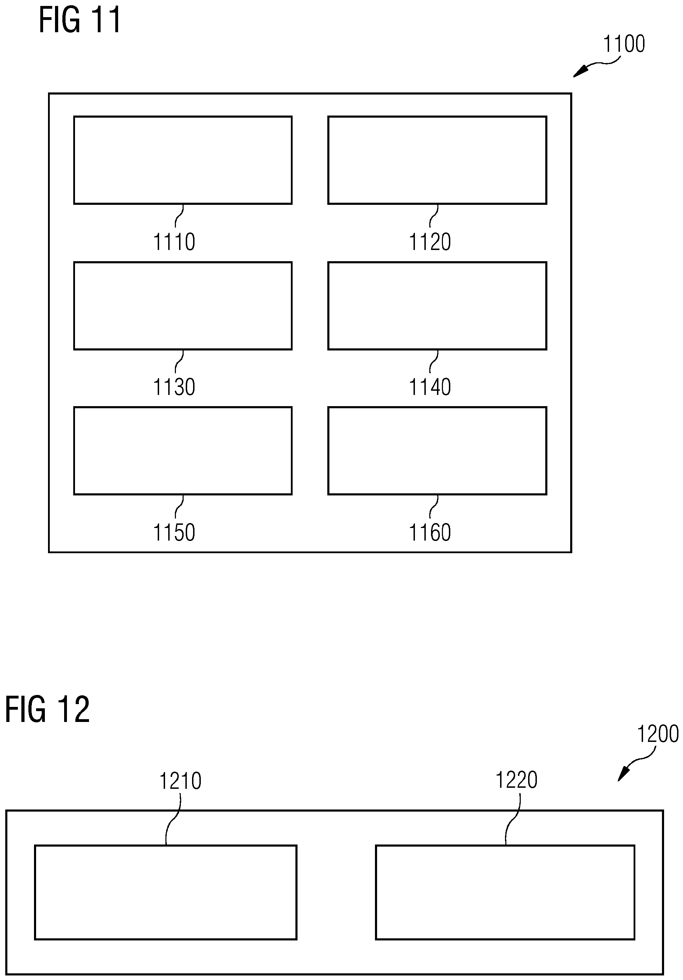

Fig. 11 zeigt eine exemplarische Computer-implementierte Vorrichtung 1100 zum Bestimmen eines Degradationsfortschritts eines Stromrichters gemäß einem Aspekt der vorliegenden Erfindung. Die Computer-implementierte Vorrichtung 1100 umfasst eine Erfassungseinheit 1110, eine erste Bestimmungseinheit 1120, eine zweite Bestimmungseinheit 1130, eine dritte Bestimmungseinheit 1140, eine Bereitstellungseinheit 1150 sowie eine vierte Bestimmungseinheit 1160.

Erfassungseinheit 1110 ist konfiguriert zum Erfassen eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist.

Erste Bestimmungseinheit 1120 ist konfiguriert zum Bestimmen einer Amplitude des Ausgangsstroms und/oder der Ausgangs-spannung basierend auf dem erfassten zeitlichen Verlauf.

Zweite Bestimmungseinheit 1130 ist konfiguriert zum Bestimmen einer Differenz zwischen der bestimmten Amplitude und einer vorbestimmten Referenzamplitude.

Dritte Bestimmungseinheit 1140 ist konfiguriert zum Bestimmen einer Regelungsgröße, zumindest teilweise basierend auf von einem Fehlerspeicher erhaltenen Daten, zum Zuführen an den Stromrichter, um die bestimmte Differenz zu minimieren.

Bereitstellungseinheit 1150 ist konfiguriert zum Bereitstellen einer Referenzregelungsgröße, welche mit einem Degradationsfortschritt des Stromrichters assoziiert ist.

Vierte Bereitstellungseinheit 1160 ist konfiguriert zum Bestimmen, zumindest teilweise basierend auf einem Vergleichen der bestimmten Regelungsgröße mit der Referenzregelungsgröße, eines Degradationsfortschritts des Stromrichters.

Fig. 12 zeigt ein exemplarisches System 1200 zum Bestimmen eines Degradationsfortschritts eines Stromrichters gemäß einem Aspekt der vorliegenden Erfindung. Das System 1200 beinhaltet eine Computer-implementierte Vorrichtung 1210 und ein Computerprogrammprodukt 1220.

Die Computer-implementierte Vorrichtung 1210 kann konfiguriert sein, wie hierin beschrieben.

Das Computerprogrammprodukt 1220 kann konfiguriert sein, wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Computer-implementiertes Verfahren (1000) zum Bestimmen eines Degradationsfortschritts eines Stromrichters, umfassend:
Erfassen (1010) eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist;
Bestimmen (1020) einer Amplitude des Ausgangsstroms und/oder der Ausgangsspannung basierend auf dem erfassten zeitlichen Verlauf;
Bestimmen (1030) einer Differenz zwischen der bestimmten Amplitude und einer vorbestimmten Referenzamplitude;
Bestimmen (1040) einer Regelungsgröße, zumindest teilweise basierend auf von einem Fehlerspeicher erhaltenen Daten, zum Zuführen an den Stromrichter, um die bestimmte Differenz zu minimieren;
Bereitstellen (1050) einer Referenzregelungsgröße, welche mit einem Degradationsfortschritt des Stromrichters assoziiert ist;
Bestimmen (1060), zumindest teilweise basierend auf einem Vergleichen der bestimmten Regelungsgröße mit der Referenzregelungsgröße, eines Degradationsfortschritts des Stromrichters.

2. Verfahren nach Anspruch 1, das Bestimmen der Regelungsgröße ferner umfassend:
Bestimmen der Regelungsgröße basierend auf einer historisch erfassten Zuordnung von Regelungsgrößen zu bestimmten Differenzen, bevorzugt unter Verwenden eines Repetitive Control Reglers.

3. Verfahren nach einem der Ansprüche 1 oder 2, wobei das Bestimmen der Regelungsgröße unter Verwenden des Repetitive Control Reglers erfolgt und wobei der Repetitive Control Regler als Vorsteuerung einer geschlossenen Regelstrecke fungiert.

4. Verfahren nach einem der Ansprüche 1-3, ferner umfassend:
Zuführen der Regelungsgröße an den Stromrichter, um die bestimmte Differenz zu minimieren.

5. Verfahren nach Anspruch 4, ferner umfassend:
Kombinieren der zugeführten Reglungsgröße mit einem Ausgang einer PI-Regelung; und
Zuführen der kombinierten Regelungsgröße an den Stromrichter, um einen Ausgangsstrom und/oder eine Ausgangsspannung des Stromrichters zu regeln.

6. Verfahren nach einem der Ansprüche 1-5, ferner umfassend:
Hinzufügen, zu dem Fehlerspeicher, einer Zuordnung der bestimmten Differenz zu der bestimmten Regelungsgröße.

7. Verfahren nach einem der Ansprüche 1-6, wobei Einträge des Fehlerspeichers mit einem Oberwellenspektrum des erfassten zeitlichen Verlaufs assoziiert sind.

8. Verfahren nach einem der Ansprüche 1-7, wobei der Degradationsfortschritt zumindest teilweise durch eine Ermüdung einer Lötstelle und/oder einer Degradation einer Gate-Elektrode eines Transistors und/oder einer Ablösung eines Bonddrahts von einem integrierten Schaltkreis oder einem Halbleiter hervorgerufen wird.

9. Verfahren nach einem der Ansprüche 1-8, wobei der Stromrichter einen Bipolartransistor mit isolierter Gate-Elektrode, IGBT, umfasst, bevorzugt sechs IGBTs.

10. Verfahren nach einem der Ansprüche 1-9, wobei der Stromrichter eine Drehstrombrückenschaltung ist, bevorzugt ein 3-phasiger 2-Level Wechselrichter.

11. Verfahren nach Anspruch 10, wobei die Drehstrombrückenschaltung zumindest sechs IGBTs umfasst welche seriell beschaltet werden; und wobei das Bestimmen der Regelungsgröße winkelabhängig für jeden der sechs IGBTs erfolgt.

12. Computerprogrammprodukt, umfassend Befehle, die bei der Ausführung des Programms durch einen Computer diesen veranlassen, das Verfahren nach einem der Ansprüche 1-11 auszuführen.

13. Computer-implementierte Vorrichtung (1100) zum Bestimmen eines Degradationsfortschritts eines Stromrichters, umfassend:
Eine Erfassungseinheit (1110) zum Erfassen eines zeitlichen Verlaufs eines Ausgangsstroms und/oder einer Ausgangsspannung des Stromrichters, wobei der Ausgangsstrom und/oder die Ausgangsspannung zur Zuführung zu einem elektrischen Antriebsmittel bestimmt ist;
Eine erste Bestimmungseinheit (1120) zum Bestimmen einer Amplitude des Ausgangsstroms und/oder der Ausgangsspannung basierend auf dem erfassten zeitlichen Verlauf;
Eine zweite Bestimmungseinheit (1130) zum Bestimmen einer Differenz zwischen der bestimmten Amplitude und einer vorbestimmten Referenzamplitude;
Eine dritte Bestimmungseinheit (1140) zum Bestimmen einer Regelungsgröße, zumindest teilweise basierend auf von einem Fehlerspeicher erhaltenen Daten, zum Zuführen an den Stromrichter, um die bestimmte Differenz zu minimieren;
Eine Bereitstellungseinheit (1150) zum Bereitstellen einer Referenzregelungsgröße, welche mit einem Degradationsfortschritt des Stromrichters assoziiert ist;
Eine vierte Bestimmungseinheit (1160) zum Bestimmen, zumindest teilweise basierend auf einem Vergleichen der bestimmten Regelungsgröße mit der Referenzregelungsgröße, eines Degradationsfortschritts des Stromrichters.

14. Computer-implementierte Vorrichtung nach Anspruch 14, ferner umfassend:
Eine Ausführungseinheit zum Ausführen des Computerprogrammprodukts nach Anspruch 12; und/oder
Eine weitere Ausführungseinheit zum Ausführen des Computer-implementierten Verfahrens nach einem der Ansprüche 1-11.

15. System (1200) zum Bestimmen eines Degradationsfortschritts eines Stromrichters, umfassend:
Computer-implementierte Vorrichtung (1210) nach einem der Ansprüche 13 oder 14;
Computerprogrammprodukt (1220) nach Anspruch 12.
